# EUROPEAN PATENT SPECIFICATION

(11) **EP 2 748 297 B1**
(45) Date of publication and mention of the grant of the patent: **20.01.2021**
(21) Application number: 11871177.9
(22) Date of filing: 24.08.2011
(51) Int. Cl.: C11D 3/37, C11D 3/50, C08G 63/66

(54) **IMPROVEMENTS RELATING TO POLYMERS, DEPOSITION AIDS, TARGETED BENEFIT AGENTS AND SUBSTRATE TREATMENT COMPOSITIONS**
VERBESSERUNGEN AN POLYMEREN, ABLAGERUNGSHILFSMITTEL, GEZIELTE PFLEGESTOFFE UND SUBSTRATBEHANDLUNGSZUSAMMENSETZUNGEN
PERFECTIONNEMENTS APPORTÉS AUX POLYMÈRES, AUXILIAIRES DE DÉPÔT, AGENTS TRAITANTS CIBLÉS ET COMPOSITIONS DE TRAITEMENT DE SUBSTRATS

(43) Date of publication of application: 02.07.2014
(73) Proprietor: Unilever N.V., 3013 AL Rotterdam (NL); Unilever PLC, London, Greater London EC4Y 0DY (GB)
(72) Inventor: CHEN, Honggang, Yangpu District Shanghai 200433 (CN); JONES, Christopher Clarkson, Bebington Wirral Merseyside CH63 3JW (GB); PAN, Xiaoyun, Changning District Shanghai 200335 (CN); WANG, Jinfang, Changning District Shanghai 200335 (CN)
(74) Representative: Hardy, Susan Margaret
(86) International application number: PCT/CN2011/001414
(87) International publication number: WO 2013/026182

(56) References cited:
- WO-A1-2009/037060
- WO-A2-2006/055505
- CN-A- 101 956 318
- US-B1- 6 517 933
- ALENKA, VESEL ET AL.: 'Improvement of adhesion of fucoidan on polyethylene terephthalate surface using gas plasma treatments' VACUUM vol. 85, no. ISS.12, 05 June 2011, pages 1083 - 1086, XP055141403
- YANG, CHIHAE ET AL.: 'Adsorption-solution structure relationships of PET/POET polymeric surfactants in aqueous solutions' POLYMER vol. 37, no. 20, September 1996, pages 4621 - 4627, XP004069465

## Description

### Technical Field

The present invention relates to substrate treatment compositions and, more specifically, to a novel deposition aid, compositions comprising particles which comprise a benefit agent (preferentially perfume) and the deposition aid. The invention also relates to the uses of said particles in the formulation of treatment (preferably laundry detergent) compositions, and, delivery of the benefit agent (preferably perfume) especially to fabric during laundering.

### Background of the Invention

The present invention will be described with particular reference to perfume as the benefit agent and laundry as the application; although the technology is believed applicable to other benefit agents used in fabric and other substrate treatment processes.

In laundry applications deposition of a perfume is used, for example, during fabric treatment processes such as fabric washing and conditioning. Methods of deposition are diverse and include deposition during the wash or rinse stages of the laundry process or direct deposition before or after the wash, such as by spraying or rubbing or by use of impregnated sheets during tumble drying or water additives during steam ironing. The perfume is often incorporated into a carrier or delivery system. Carrier systems for perfumes are typically based on encapsulation or entrapment of the perfume within a matrix. After deposition onto a surface, a problem exists in that longevity of adherence to that surface of the perfume, in a surfactant containing environment, is inherently poor. A perfume which has been deposited onto a fabric may be washed off again during a main wash, or in the perfume may be leached from its carrier into the wash. Protection of the perfume is, therefore, required before and after it has been deposited onto a surface. Much the same problems are encountered with other benefit agents, which are, like perfume, typically relatively expensive and present in laundry compositions at relatively low levels.

WO 94/19448 relates to compositions which comprise both a soil release polymer and an encapulated perfume. The soil release polymer is said to improve the deposition of the perfume containing particles.

WO 99/36469 relates to compositions which are substantive to cotton and which contain both perfume containing particles and a polymer which is substantive to cotton, such as locust bean gum.

WO 01/46357 relates to a fusion protein comprising a cellulose binding domain and a domain having a high binding affinity for another ligand. This high affinity binding domain is preferably directed at a Benefit Agent.

WO 07/62833 relates to compositions which comprise core-shell encapsulated perfume particles decorated with locust bean gum, which are substantive to cellulose.

WO 09/037060 relates to compositions which comprise particles which are targeted by means of phthalate-containing deposition aids, such as PET-POET polymers and consequently are substantive to polyester.

WO2006/055787 (Procter & Gamble) discloses Laundry formulations containing a cellulose ether polymer covalently bound to a reactive dye for whitening cellulosic fabric.

WO 2006/0555505 A2 describes starch-polyester graft copolymer and chemically modified starch-polyester graft copolymer composition comprising a chemically modified starch or chemically modified starch-nanoclay product. US 6,517,933 B1 describes a hybrid polymer material or system that combines naturally occurring building blocks with synthetic building blocks.

One difficulty with deposition aids for particles arises from the fact that the particle can acquire an electrostatic charge which repels them from the substrate, and prevents close approach of the particle and the substrate. This prevents or reduces the interaction of the deposition aid with the substrate.

### Brief Description of the Invention

We have now devised a new deposition aid which is a single polymer substantive to both polyester and cellulose. This is also believed to have utility as a soil release polymer.

Accordingly, a first aspect of the present invention provides polymer comprising at least one phthalate-containing region substantive to polyester and at least one polysaccharide-containing region substantive to cellulose, wherein the at least one phthalate-containing region further comprises a polyol; the at least one polysaccharide-containing region comprises a β-1,4-linked backbone; the polymer has, in part, the structure of poly-mannan, poly-glucan, poly-glucomannan, poly-xyloglucan and poly-galactomannan or a mixture thereof; and the at least one phthalate/polyol region comprises units derived from polyethylene and/or polypropylene glycol and a terephthalate.

Preferably the phthalate-containing regions may be phthalate/polyamine or phthalate/polyamide regions.

Preferably the at least one phthalate region comprises units derived from subunits comprising polypropylene glycol (PPG), polyethylene glycol (PEG), polyethylene terephthalate (PET), or polyoxyethyleneterephthalate (POET). Other polyol monomers such as glycerol may be present. Most preferably, the structure of the, or each, such region is that of a polymer selected from the group comprising PPT/POET PET/POET, PEG/POET, PET/PEG and phthalate/glycerol/ethylene glycol polymers.

Preferably, the polymer is a graft polymer of the form LBG-graft-PET-POET.

The polymer alone may find utility as a soil release agent for both cellulose and polyester. However, it is particularly advantageous to attach the polymer of the present invention to a further benefit agent as a deposition aid for that benefit agent. This may be a direct attachment, by binding the polymer directly to the benefit agent, or an indirect attachment, by binding the polymer to a carrier for the benefit agent. An especially preferred embodiment of the invention comprises particles or droplets comprising the benefit agent which have the polymer, as a deposition aid, on their outer surface. Particles which have a core-shell structure are especially preferred. It is preferred that the shell is polymeric. It is preferred that the core comprises a benefit agent.

Accordingly, a further aspect of the present invention provides a particle for deposition of a benefit agent comprising:
a) a core region which comprises a benefit agent, said benefit agent preferably comprising a perfume,
b) a polymeric shell enclosing said core region, and,
c) at least partially exterior to said shell, a polymeric deposition aid comprising a phthalate derived region which is substantive to polyester and is distal from the polymeric shell and a polysaccharide derived region which is substantive to cellulose and is proximal to the polymeric shell.

It is particularly preferable that the substantivity to polyester and/or cotton is maintained in the presence of surfactant at concentrations of above 0.1 g/L and preferably also above the surfactants critical micelle concentration in the liquor. This means that the benefit agent shows improved deposition on cloth during laundering or other fabric treatment, such as conditioning, due to the presence of the polymer as a deposition aid.

### Detailed Description of the Invention

In order that the present invention may be further understood it is described in further detail below with particular reference to various preferred features. All amounts quoted are wt.% of total composition unless otherwise stated.

Except in the operating and comparative examples, or where otherwise explicitly indicated, all numbers in this description indicating amounts or ratios of material or conditions of reaction, physical properties of materials and/or use are to be understood as modified by the word "about".

### Polymer phthalate regions

As noted above, the polymer comprises at least one region of a phthalate containing polymer, more preferably a (poly)ethylene- or (poly)propylene-containing terephthalate polymer, more preferably a PPT/POET, PET/POET, PEG/POET or PET/PEG polymer. Materials of this type are widely available to the laundry formulator as they are commonly used as so-called "soil-release polymers". In the context of the present invention "phthalate" includes substituted phthalates, for example sulphonated phthalates as well as isophthalates and terephthalates.

The phthalate containing region may be linear or branched.

Polymer units having the structure of any polymeric soil release agent known to those skilled in the art can be employed in polymers according to the invention. Polymeric soil release agents are characterized by having both hydrophilic segments, to hydrophilize the surface of hydrophobic fibers, such as polyester and nylon, and hydrophobic segments, to deposit upon hydrophobic fibers and remain adhered thereto through completion of washing and rinsing cycles and, thus, serve as an anchor for the hydrophilic segments. This is commonly done to enable stains occurring subsequent to treatment with the soil release agent to be more easily removed in later washing procedures.

The polymers useful herein especially include those having one or more nonionic hydrophilic components comprising oxyethylene, polyoxyethylene, oxypropylene or polyoxypropylene segments, and, one or more hydrophobic components comprising terephthalate segments. Typically, oxyalkylene segments of these deposition aids will have a degree of polymerization of from 1 to about 400, although higher levels can be used, preferably from 100 to about 350, more preferably from 200 to about 300.

One type of preferred polymer is one having regions which comprise a copolymer having random blocks of ethylene terephthalate (PET) and polyethylene oxide terephthalate (POET). The preferred molecular weight of this class of these regions is in the range of from about 2kD to about 55kD, more preferably 4-40kD.

Another preferred structure is polyester with repeat units of ethylene terephthalate units contains 10-15% by weight of ethylene terephthalate (PET) units together with 90-80% by weight of polyoxyethylene terephthalate (POET) units, derived from a polyethylene glycol (PEG) of average molecular weight 0.2kD-40kD. Examples of this class of polymer include the commercially available material ZELCON 5126 (from DuPont) and MILEASE T (from ICI). Examples of related polymers can be found in US 4702857.

Another preferred structure is a sulfonated product of a substantially linear ester oligomer comprised of an oligomeric ester backbone of terephthaloyl and oxyalkyleneoxy repeat units and terminal moieties covalently attached to the backbone. These soil release agents are described fully in US 4968451. Other suitable polymeric structures include that of the terephthalate polyesters of US 4711730, the anionic end-capped oligomeric esters of US 4721580, and the block polyester oligomeric compounds of US 4702857.

Preferred polymeric structures also include that of the soil release agents of U.S. 4877896 which discloses anionic, especially sulfoarolyl, end-capped terephthalate esters.

Still another preferred structure is an oligomer with repeat units of terephthaloyl units, sulfoisoterephthaloyl units, oxyethyleneoxy and oxy-1,2-propylene units. The repeat units form the backbone of the oligomer and are preferably terminated with a modified isethionate end-cap. A particularly preferred deposition aid of this type comprises about one sulfoisophthaloyl unit, 5 terephthaloyl units, oxyethyleneoxy and oxy-1,2-propyleneoxy units in a ratio of from about 1.7 to about 1.8, and an end-cap units of sodium 2-(2-hydroxyethoxy)-ethanesulfonate.

The sulphonated materials are less preferred as they carry a negative charge which can cause repulsion of the polymer from the substrate.

Particularly preferred phthalate containing polymers are those derived from PPT/POET and PET/POET.

It is notable that the phthalate containing polymers are relatively short in comparison to the typical distance at which the repulsive forces between a particle and a substrate become significant. Typically this distance is a few nanometres and the problem becomes worse as the ionic strength of the medium in which the interaction occurs is reduced. It is difficult to make the phthalate polymers longer due to the chemistry of the condensation reactions which are used to make them.

### Polymer polysaccharide regions

The polysaccharide region or regions may gain an affinity for cellulose upon hydrolysis, such as is the case with materials such as cellulose mono-acetate or, preferably, may have a natural affinity for cellulose.

Preferably the molecular weight of the polysaccharide region is greater than 100kD, preferably 200-600kD. This is typically significantly longer than the phthalate region, such that, when the polysaccharide region is attached to a particle, the phthalate region is sufficiently far away from the particle to be able to bridge and spacing between the particle and the substrate caused by electrostatic repulsion.

Particularly preferred polysaccharide structures are selected from the group consisting of poly-glucan, poly-xyioglucan and poly-galactomannan.

Naturally-occuring polymer structures or the shorter hydrolysis products of naturally occurring polymer structures are particularly preferred. For example, preferred polysaccharide structures are that of locust bean gum, xyloglucan, guar gum or mixtures thereof.

In an especially preferred embodiment the polysaccharide region has the structureof locust bean gum (LBG). This does not hydrolyse and has a natural affinity for cellulose. LBG is (also called Carob bean gum and Carubin) is extracted from the seed (kernels) of the carob tree (Ceratonia siliqua).

Alternative polysaccharide structures are modified polysaccharides which are substantive to cellulosic fabrics.

Preferred amongst these are non-ionic polysaccharides selected from the group consisting of: hydroxyl-propyl cellulose, hydroxy-propyl methyl cellulose, hydroxy-ethyl methyl cellulose, hydroxy-propyl guar, hydroxy-ethyl ethyl cellulose or methyl cellulose. These materials are substantive both to cellulosics and to polyesters.

Preferably, the polysaccharide region or regions have only β-1,4 linkages in the polymer backbone.

### Grafting

Grafting is preferably performed with a reactive linker species which is reacted with the polymer that will form the phthalate regions, to form an intermediate which can than be grafted onto the polymer that will form the polysaccharide regions. Suitable linkers include epichlorohydrin and cyanuric chloride.

The graft polymer will typically comprise a weight ratio of >3:1 polysaccharide region to phthalate region and more preferably this weight ratio will be in excess of 10:1.

### Benefit agents

Benefit agents provide a range of benefits to cloth. These include benefits of softening, conditioning, lubricating, crease reducing, ease of ironing, moisturising, colour preserving and/or anti-pilling, quick drying, UV protecting, shape retaining, soil releasing, texturising, insect repelling, fungicidal, dyeing and/or fluorescent benefit to the fabric. A highly preferred benefit is the delivery of fragrance. Preferred benefit agents are perfumes (whether free and/or encapsulated), pro-fragrance, clays, enzymes, antifoams, fluorescers, bleaching agents and precursors thereof (including photo-bleach), shading dyes and/or pigments, fabric conditioning agents (for example cationic surfactants including water-insoluble quaternary ammonium materials and/or silicones), lubricants, photo-protective agents (including sunscreens), antioxidants, reducing agents, sequestrants, colour care additives (including dye fixing agents), unsaturated oil, emollients insect repellents and/or pheromones and anti-microbial and microbe control agents. Mixtures of two or more of these may be employed. Particular benefit agents are described in further detail below.

### Benefit agent association and carriers

The benefit agent may be attached directly to the polymer. Examples of such benefit agents include silicone conditioning agents (to give a "softening in the wash" benefit).

One class of benefit agent that may be usefully attached to the polymer comprises the optical benefit agents. These include shading dyes (which mask the yellowing of fabrics and give improved whiteness), fluorescers, photo-bleaches and sunscreens. Of these shading dyes are preferred. Particularly preferred shading dyes have a chromophore selected from azo, anthraquinone, phthalocyanine, formazan and triphendioaxazine. More preferably, azo, anthraquinone, phthalocyanine, and triphendioaxazine. Most preferably, azo and anthraquinone. The dyes maybe linked directly to the polymer or may be linked via a bridging species.

In the alternative, the polymer is attached to a carrier for the benefit agent. An example of such a system would be where the polymer was attached to a silicone polymer that was associated with a droplet of a softening silicone. The polymer would therefore act as a deposition aid for the silicone droplet. It is further preferred that the polymer is attached to a particle which either comprises the benefit agent per-se or which is itself a carrier for the benefit agent. An example of such would be a perfume carrying particle with the polymer attached to the surface of the particle.

While it is preferred to use polymer particles, preferably core-sheli encapsulates, many other types of particle can be envisaged as the benefit agent carrier. Perfumes have been adsorbed onto a clay or zeolite material that is then admixed into particulate detergent compositions: U.S. Pat. No. 4,539,135 discloses particulate laundry compounds comprising a clay or zeolite material carrying perfume. Combinations of perfumes generally with larger pore size zeolites such as zeolite X and Y are also taught in the art. East German Patent Publication No. 248,508, relates to perfume dispensers containing a faujasite-type zeolite (e.g., zeolite X and Y) loaded with perfume. Also, East German Patent Publication No. 137,599, published Sep. 12, 1979 teaches compositions for use in powdered washing agents to provide thermoregulated release of perfume. Zeolites A, X and Y are taught for use in these compositions. Other perfume delivery systems are taught by WO 97/34982 and WO 98/41607, published by The Procter & Gamble. WO 97/34982 discloses particles comprising perfume loaded zeolite and a release barrier, which is an agent derived from a wax and having a size (i.e., a cross-sectional area) larger than the size of the pore openings of the zeolite carrier.

WO 98/41607 discloses glassy particles comprising agents useful for laundry or cleaning compositions and a glass derived from one or more of at least partially-water-soluble hydroxylic compounds.

Silicas, amorphous silicates, crystalline nonlayer silicates, layer silicates, calcium carbonates, calcium/sodium carbonate double salts, sodium carbonates, sodalites, alkali metal phosphates, pectin, chitin microbeads, carboxyalkylcelluloses, gums, resins, gelatin, gum arabic, porous starches, modified starches, carboxyalkyl starches, cyclodextrins, maltodextrins, synthetic polymers such as polyvinyl pyrrolidone (PVP), polyvinyl alcohol (PVA), cellulose ethers, polystyrene, polyacrylates, polymethacrylates, polyolefins, aminoplast polymers, crosslinkers and mixtures thereof can all provide a basis for perfume particles.

Polymer particles are preferred.

In one preferred aspect of the invention the polymer, as deposition aid, is attached to at least partially pre-formed particles.

The polymer is bound to the particle by means of a covalent bond, entanglement or strong adsorption, preferably by a covalent bond or entanglement and most preferably by means of a covalent bond. By entanglement as used herein is meant that the deposition aid is adsorbed onto the particle as the polymerisation proceeds and the particle grows in size. It is believed that under such circumstnces part of the adsorbed deposition aid becomes buried within the interior of the particle. Hence at the end of the polymerisation, part of the deposition aid is entrapped and bound in the polymer matrix of the particle, whilst the remainder is free to extend into the aqueous phase.

The deposition aid is preferably mainly attached to the particle surface and is not, to any significant extent, distributed throughout the internal bulk of the particle. Thus the particle which is produced when using a deposition aid according to the preferred process of the invention can be thought of as a "hairy particle". This feature of the invention provides significant cost reduction opportunities for the manufacturer as much less polymer is required as a deposition aid.

Other types of particle surface morphology may be produced when a deposition aid is attached to the particle of the invention. For example, where a polymer attaches to the particle surface in multiple places, loops may result, or the deposition aid may be in the form of a swollen polymer layer at the particle surface.

The polymer carrier particles of the invention can comprise a wide selection of monomeric units. By "monomer units" as used herein is meant the monomeric units of the polymer chain, thus references to "a polymer particle comprising insoluble monomer units" as used herein means that the polymer particles is derived from insoluble monomers, and so forth.

As noted above, the monomer units are preferably derived from monomers which are suitable for either step growth polymerisation or addition/free radical polymerisation.

Where used, perfume is typically present in an amount of from 10-85% by total weight of the carrier particle, preferably from 20 to 75 % by total weight of the particle.

The perfume suitably has a molecular weight of from 50 to 500. Where pro-fragrances are used the molecular weight will generally be higher.

Useful components of the perfume include materials of both natural and synthetic origin. They include single compounds and mixtures. Specific examples of such components may be found in the current literature, e.g., in Fenaroli's Handbook of Flavor Ingredients, 1975, CRC Press; Synthetic Food Adjuncts, 1947 by M. B. Jacobs, edited by Van Nostrand; or Perfume and Flavor Chemicals by S. Arctander 1969, Montclair, N.J. (USA). These substances are well known to the person skilled in the art of perfuming, flavoring, and/or aromatizing consumer products, i.e., of imparting an odor and/or a flavor or taste to a consumer product traditionally perfumed or flavored, or of modifying the odor and/or taste of said consumer product.

By perfume in this context is not only meant a fully formulated product fragrance, but also selected components of that fragrance, particularly those which are prone to loss, such as the so-called 'top notes'. The perfume component could also be in the form of a profragrance. WO 2002/038120 (P&G), for example, relates to photo-labile pro-fragrance conjugates which upon exposure to electromagnetic radiation are capable of releasing a fragrant species.

Top notes are defined by Poucher (Journal of the Society of Cosmetic Chemists 6(2):80 [1955]). Examples of well known top-notes include citrus oils, linalool, linalyl acetate, lavender, dihydromyrcenol, rose oxide and cis-3-hexanol. Top notes typically comprise 15-25%wt of a perfume composition and in those embodiments of the invention which contain an increased level of top-notes it is envisaged at that least 20%wt would be present within the encapsulate.

Typical perfume components which it is advantageous to encapsulate, include those with a relatively low boiling point, preferably those with a boiling point of less than 300, preferably 100-250 Celsius.

It is also advantageous to encapsulate perfume components which have a low LogP (ie. those which will be partitioned into water), preferably with a LogP of less than 3.0. These materials, of relatively low boiling point and relatively low LogP have been called the "delayed blooming" perfume ingredients and include the following materials:
Allyl Caproate, Amyl Acetate, Amyl Propionate, Anisic Aldehyde, Anisole, Benzaldehyde, Benzyl Acetate, Benzyl Acetone, Benzyl Alcohol, Benzyl Formate, Benzyl Iso Valerate, Benzyl Propionate, Beta Gamma Hexenol, Camphor Gum, Laevo-Carvone, d-Carvone, Cinnamic Alcohol, Cinamyl Formate, Cis-Jasmone, cis-3-Hexenyl Acetate, Cuminic Alcohol, Cyclal C, Dimethyl Benzyl Carbinol, Dimethyl Benzyl Carbinol Acetate, Ethyl Acetate, Ethyl Aceto Acetate, Ethyl Amyl Ketone, Ethyl Benzoate, Ethyl Butyrate, Ethyl Hexyl Ketone, Ethyl Phenyl Acetate, Eucalyptol, Eugenol, Fenchyl Acetate, Flor Acetate (tricyclo Decenyl Acetate), Frutene (tricyclco Decenyl Propionate), Geraniol, Hexenol, Hexenyl Acetate, Hexyl Acetate, Hexyl Formate, Hydratropic Alcohol, Hydroxycitronellal, Indone, Isoamyl Alcohol, Iso Menthone, Isopulegyl Acetate, Isoquinolone, Ligustral, Linalool, Linalool Oxide, Linalyl Formate, Menthone, Menthyl Acetphenone, Methyl Amyl Ketone, Methyl Anthranilate, Methyl Benzoate, Methyl Benyl Acetate, Methyl Eugenol, Methyl Heptenone, Methyl Heptine Carbonate, Methyl Heptyl Ketone, Methyl Hexyl Ketone, Methyl Phenyl Carbinyl Acetate, Methyl Salicylate, Methyl-N-Methyl Anthranilate, Nerol, Octalactone, Octyl Alcohol, p-Cresol, p-Cresol Methyl Ether, p-Methoxy Acetophenone, p-Methyl Acetophenone, Phenoxy Ethanol, Phenyl Acetaldehyde, Phenyl Ethyl Acetate, Phenyl Ethyl Alcohol, Phenyl Ethyl Dimethyl Carbinol, Prenyl Acetate, Propyl Bornate, Pulegone, Rose Oxide, Safrole, 4-Terpinenol, Alpha-Terpinenol, and /or Viridine
It is commonplace for a plurality of perfume components to be present in a formulation. In the encapsulates of the present invention it is envisaged that there will be four or more, preferably five or more, more preferably six or more or even seven or more different perfume components from the list given of delayed blooming perfumes given above present in the encapsulated perfume.

Part or all of the perfume may be in the form of a pro-fragrance. For the purposes of the present invention a pro-fragrance is any material which comprises a fragrance precursor that can be converted into a fragrance.

Suitable pro-fragrances are those that generate perfume components which are aldehydes. Aldehydes useful in perfumery include but are not limited to phenylacetaldehyde, p-methyl phenylacetaldehyde, p-isopropyl phenylacetaldehyde, methyinonyl acetaldehyde, phenylpropanal, 3-(4-t-butylphenyl)-2-methyl propanal, 3-(4-t-butylphenyl)-propanal, 3-(4-methoxyphenyl)-2-methylpropanal, 3-(4-isopropylphenyl)-2-methylpropanal, 3-(3, 4-methylenedioxyphenyl)-2-methyl propanal, 3-(4-ethylpheny)-2,2-dimethylpropanal, phenylbutanal, 3-methyl-5-phenylpentanal, hexanal, trans-2-hexenal, cis-hex-3-enal, heptanal, cis-4-heptenal, 2-ethyl-2-heptenal, 2,6-dimethyl-5-heptenal, 2,4-heptadienal, octanal, 2-octenal, 3,7-dimethyloctanal, 3,7-dimethyl-2,6-octadien-1-al, 3,7-dimethyl-1,6-octadien-3-al, 3,7-dimethyl-6-octenal, 3,7-dimethyl-7-hydroxyoctan-1-al, nonanal, 6-nonenal, 2,4-nonadienal, 2, 6-nonadienal, decanal, 2-methyl decanal, 4-decenal, 9-decenal, 2,4-decadienal, undecanal, 2-methyldecanal, 2-methylundecanal, 2,6,10-trimethyl-9-undecenal, undec-10-enyl aldehyde, undec-8-enanal, dodecanal, tridecanal, tetradecanal, anisaldehyde, bourgenonal, cinnamic aldehyde, a-amylcinnam-aldehyde, a-hexyl cinnamaldehyde, methoxy-cinnamaldehyde, citronellal, hydroxy-citronellal, isocyclocitral, citronellyl oxyacet-aldehyde, cortexaldehyde, cumminic aldehyde, cyclamen aldehyde, florhydral, heliotropin, hydrotropic aldehyde, lilial, vanillin, ethyl vanillin, benzaldehyde, p-methyl benzaldehyde, 3,4-dimethoxybenzaldehyde, 3-and 4-(4-hydroxy-4-methyl-pentyl)-3-cyclohexene-1-carboxaldehyde, 2,4-dimethyl-3-cyclohexene-1-carboxaldehyde, 1-methyl-3-(4-methylpentyl)-3-cyclohexen-carboxaldehyde, p-methylphenoxyacetaldehyde, and mixtures thereof.

Another group of perfumes with which the present invention can be applied are the so-called 'aromatherapy' materials. These include many components also used in perfumery, including components of essential oils such as Clary Sage, Eucalyptus, Geranium, Lavender, Mace Extract, Neroli, Nutmeg, Spearmint, Sweet Violet Leaf and Valerian. By means of the present invention these materials can be transferred to textile articles that will be worn or otherwise come into contact with the human body (such as handkerchiefs and bed-linen).

Insect repellents are related to perfume species (many fall into both classes) and are another preferred benefit agent. The most commonly used insect repellents include: DEET (N,N-diethyl-m-toluamide), essential oil of the lemon eucalyptus (Corymbia citriodora) and its active compound p-menthane-3,8-diol (PMD), Icaridin, also known as Picaridin, D-Limonene, Bayrepel, and KBR 3023, Nepetalactone, also known as "catnip oil", Citronella oil, Permethrin, Neem oil and Bog Myrtle.

Known insect repellents derived from natural sources include: Achillea alpina, alpha-terpinene, Basil oil (Ocimum basilicum), Callicarpa americana (Beautyberry), Camphor, Carvacrol, Castor oil (Ricinus communis), Catnip oil (Nepeta species), Cedar oil (Cedrus atlantica), Celery extract (Apium graveolens), Cinnamon (Cinnamomum Zeylanicum, leaf oil), Citronella oil (Cymbopogon fleusus), Clove oil (Eugenic caryophyllata), Eucalyptus oil (70%+ eucalyptol, also known as cineol), Fennel oil (Foeniculum vulgare), Garlic Oil (Allium sativum), Geranium oil (also known as Pelargonium graveolens), Lavender oil (Lavandula officinalis), Lemon eucalyptus (Corymbia citriodora) essential oil and its active ingredient p-menthane-3,8-diol (PMD), Lemongrass oil (Cymbopogon flexuosus), Marigolds (Tagetes species), Marjoram (Tetranychus urticae and Eutetranychus orientalis), Neem oil (Azadirachta indica), Oleic acid, Peppermint (Mentha x piperita), Pennyroyal (Mentha pulegium), Pyrethrum (from Chrysanthemum species, particularly C. cinerariifolium and C. coccineum), Rosemary oil (Rosmarinus officinalis), Spanish Flag Lantana camara (Helopeltis theivora), Solanum villosum berry juice, Tea tree oil (Melaleuca alternifolia) and Thyme (Thymus species) and mixtures thereof.

The perfume may be encapsulated alone or co-encapsulated with carrier materials, further deposition aids and/or fixatives. Preferred materials to be co-encapsulated in carrier particles with the perfume include waxes, paraffins, stabilizers and fixatives.

An optional yet preferred component of carrier particles is a formaldehyde scavenger. This is particularly advantageous in carrier particles which may comprise formaldehyde as a consequence of their manufacturing process or components. Formaldehyde scavenger is chosen from: sodium bisulfite, urea, cysteine, cysteamine, lysine, glycine, serine, carnosine, histidine, glutathione, 3,4-diaminobenzoic acid, allantoin, glycouril, anthranilic acid, methyl anthranilate, methyl 4-aminobenzoate, ethyl acetoacetate, acetoacetamide, malonamide, ascorbic acid, 1,3-dihydroxyacetone dimer, biuret, oxamide, benzoguanamine, pyroglutamic acid, pyrogallol, methyl gallate, ethyl gallate, propyl gallate, triethanol amine, succinamide, thiabendazole, benzotriazol, triazole, indoline, sulfanilic acid, oxamide, sorbitol, glucose, cellulose, poly(vinyl alcohol), poly(vinyl amine), hexane diol, ethylenediamine-N,N'-bisacetoacetamide, N-(2-ethylhexyl)acetoacetamide, N-(3-phenylpropyl)acetoacetamide, lilial, helional, melonal, triplal, 5,5-dimethyl-1,3-cyclohexanedione, 2,4-dimethyl-3-cyclohexenecarboxaldehyde, 2,2-dimethyl-1,3-dioxan-4,6-dione, 2-pentanone, dibutyl amine, triethylenetetramine, benzylamine, hydroxycitronellol, cyclohexanone, 2-butanone, pentane dione, dehydroacetic acid, chitosan, or a mixture thereof. Preferred formaldehyde scavengers are sodium bisulfite, ethyl acetoacetate, acetoacetamide, ethylenediamine-N,N'-bisacetoacetamide, ascorbic acid, 2,2-dimethyl-1,3-dioxan-4,6-dione, helional, triplal, lilial and mixtures thereof.

### Process details

The process for the preparation of the particles is preferably a two step process in which the first step forms a particle comprising the benefit agent and the second step applies a coating to the capsule which includes the polymer as a deposition aid. The first step can either be step-growth or addition polymerisation and the second step is preferably addition polymerisation.

Suitable classes of monomers for step-growth polymerisation are given in the group consisting of the melamine/urea/formaldehyde class, the isocyanate/diol class (preferably the polyurethanes) and polyesters. Preferred are the melamine/urea formaldehyde class and the polyurethanes.

Suitable classes of monomers for addition/free radical polymerisation are given in the group consisting of olefins, ethylene, vinylaromatic monomers, esters of vinyl alcohol with mono- and di- carboxylic acids, esters of α,β-monoethylenically unsaturated mono- and dicarboxylic acids with alcohols, nitriles of α,β-monoethylenically unsaturated carboxylic acids, conjugated dienes, α,β-monoethylenically unsaturated monocarboxylic and dicarboxylic acids and their amides, methacrylic acid and its esters with alcohols and diols, acrylic acid and its esters with alcohols and diols, dimethyl or di-n-butyl maleate, and vinyl-sulfonic acid and its water-soluble salts, and mixtures thereof. The polymer particle may comprise mixtures of monomer units.

The polymer particle may optionally comprise monomers which are cross-linkers. Such cross-linkers may have at least two non-conjugated ethylenically unsaturated double bonds. Examples are alkylene glycol diacrylates and dimethacrylates. A further type of suitable cross-linking monomers are those that are conjugated, such as divinyl benzene. If present, these monomers constitute from 0.1 to 10 % by weight, based on the total amount of monomers to be polymerised.

The monomers are preferably selected from: styrene; α-methylstyrene; o-chlorostyrene; vinyl acetate; vinyl propionate; vinyl n-butyrate; esters of acrylic, methacrylic, maleic, fumaric or itaconic acid with methyl, ethyl, n- butyl, isobutyl, n-hexyl and 2-ethylhexyl alcohol; 1 ,3-butadiene; 2,3 dimethyl butadiene; and isoprene. The preferred monomers are vinyl acetate and methyl acrylate.

Optionally, the monomers are used as co-polymers with one or more of acrylic acid, methacrylic acid, maleic acid, fumaric acid, itaconic acid, poly (alkylene oxide) monoacrylates and monomethacrylates, N-vinyl-pyrrolidone, methacrylic and acrylic acid, 2-hydroxyethyl acrylates and methacrylates, glycerol acrylates and methacrylates, poly(ethylene glycol) methacrylates and acrylates, n-vinyl pyrrolidone, acryloyl morpholine, vinyl formamide, n-vinyl acetamide and vinyl caprolactone, acrylonitrile (71 g/l), acrylamide, and methacrylamide at levels of less than 10 % by weight of the monomer unit content of the particle; 2-(dimethylamino) ethyl methacrylate, 2-(diethylamino) ethyl methacrylate, 2-(tert-butylamino) ethyl methacrylate, 2 - aminoethyl methacrylate, 2-(2-oxo-1-imidazolidinyl) ethyl methacrylate, vinyl pyridine, vinyl carbazole, vinyl imidazole, vinyl aniline, and their cationic forms after treatment with alkyl halides.

Optional cross linkers include vinyltoluenes, divinyl benzene, ethylene glycol diacrylate, 1 ,2-propylene glycol diacrylate, 1 ,3-propylene glycol diacrylate, 1 ,3-butylene glycol diacrylate, 1 ,4-butylene glycol diacrylates, ethylene glycol dimethacrylate, 1 ,2-propylene glycol dimethacrylate, 1 ,3-propylene glycol dimethacrylate, 1 3-butylene glycol dimethacrylate, 1 ,4-butylene glycol dimethacrylate, divinylbenzene, vinyl methacrylate, vinyl acrylate, allyl methacrylate, allyl acrylate, diallyl maleate, diallyl fumarate, methylenebisacrylamide, cyclopentadienyl acrylate, and triallyl cyanurate. It is preferable that the ratio of the monomers used in the shell formation and those used in deposition aid attachment are the ratio of 20:1 to 1 :1 (as shell formendeposition linker). Preferably, the ratio is 5:1 -2:1 , more preferably 4:1-2:1 as better particle deposition on fabric is found as the ratio approaches 2:1.

As noted above the process for the preparation of the particles is preferably a two step process in which the first step forms a capsule around the benefit agent and the second step applies a coating to the capsule which includes the deposition aid. The first step can either be step-growth or addition polymerisation and the second step is preferably addition polymerisation.

It is particularly preferably that the first step uses monomers selected from melamine/urea-formaldehyde or methyl-methacrylate or isocyanate/diol, and the second step uses monomers selected from vinyl acetate and/or methyl acyrlate.

It is particular preferred that the non-ionic deposition aid is not added until the second step.

For step-growth polymerisation some heating is generally necessary to cause polymerisation to proceed. Initiators and chain transfer agents may also be present in the polymerisation mixture where use is made of any addition polymerisation. Those skilled in the art will recognise that a chemical initiator will generally be required for addition polymerisation but that there are instances in which alternative forms of initiation will be possible, e.g. ultrasonic initiation or initiation by irradiation.

The initiator is preferably a chemical or chemicals capable of forming free radicals. Typically, free radicals can be formed either by homolytic scission (i.e. homolysis) of a single bond or by single electron transfer to or from an ion or molecule (e.g. redox reactions). Suitably, in context of the invention, homolysis may be achieved by the application of heat (typically in the range of from 50 to 100°C). Some examples of suitable initiators in this class are those possessing peroxide (-O-O-) or azo (-N=N-) groups, such as benzoyl peroxide, t-butyl peroxide, hydrogen peroxide, azobisisobutyronitrile and ammonium persulphate. Homolysis may also be achieved by the action of radiation (usually ultraviolet), in which case it is termed photolysis. Examples are the dissociation of 2,2'-azobis (2-cyanopropane) and the formation of free radicals from benzophenone and benzoin. Redox reactions can also be used to generate free radicals. In this case an oxidising agent is paired with a reducing agent which then undergo a redox reaction. Some examples of appropriate pairs in the context of the invention are ammonium persulphate/sodium meta-bisulphite, cumyl hydroperoxide/ferrous ion and hydrogen peroxide/ascorbic acid.

Preferred initiators are selected from the following:
Homolytic: benzoyl peroxide, t-butyl peroxide, hydrogen peroxide, azobisisobutyronithle, ammonium persulphate, 2,2'-azobis (cyanopropane), benzophenone, benzoin,
Redox: ammonium persulphate/sodium metabisulphite mixture, cumyl hydroperoxide/ferrous ion mixture and/or hydrogen peroxide/ascorbic acid mixture.

Preferred initiators are ammonium persulphate and hydrogen peroxide/ascorbic acid mixture. The preferred level of initiator is in the range of from 0.1 to 5.0 % w/w by weight of monomer, more preferably, the level is in the range of from 1.0 to 3.0 % w/w by weight of monomer.

Chain transfer agents can optionally be used. A chain transfer agent contains very labile hydrogen atoms that are easily abstracted by a propagating polymer chain. This terminates the polymerisation of the growing polymer, but generates a new reactive site on the chain transfer agent that can then proceed to initiate further polymerisation of the remaining monomer. Chain transfer agents in the context of the invention typically contain thiol (mercaptan) functionality and can be represented by the general chemical formula RS-H, such as n-dodecyl mercaptan and 2-mercaptoethanol. Preferred chain transfer agents are monothioglycerol and n-dodecyl mercaptan, used at levels of, preferably from 0 to 5 % w/w based on the weight of the monomer and more preferably at a level of 0.25 % w/w based on the weight of the monomer.

The preferred product of such a process is a slurry or dispersion comprising some 30-50% of solids.

### Laundry Treatment Compositions

The deposition aid linked polymer particles of the invention may be incorporated into laundry compositions. This may be done by mixing a slurry/dispersion product with some or all of the other components of the composition, preferably by spraying onto the components. Advantageously, the slurry/dispersion need not be dried extensively (if at all) and this reduces benefit agent losses.

The polymer particles are typically included in said compositions at levels of from 0.001% to 10%, preferably from 0.005% to 5%, most preferably from 0.01% to 3% by weight of the total composition.

The active ingredient in the compositions is preferably a surface active agent or a fabric conditioning agent. More than one active ingredient may be included. For some applications a mixture of active ingredients may be used.

The compositions of the invention may be in any physical form e.g. a solid such as a powder or granules, a tablet, a solid bar, a paste, gel or liquid, especially, an aqueous based liquid. In particular the compositions may be used in laundry compositions, especially in liquid, powder or tablet laundry composition.

The compositions of the present invention are preferably laundry compositions, especially main wash (fabric washing) compositions or rinse-added softening compositions. The main wash compositions may include a fabric softening agent and the rinse-added fabric softening compositions may include surface-active compounds, particularly non-ionic surface-active compounds.

The detergent compositions of the invention may contain a surface-active compound (surfactant) which may be chosen from soap and non-soap anionic, cationic, non-ionic, amphoteric and zwitterionic surface-active compounds and mixtures thereof. Many suitable surface-active compounds are available and are fully described in the literature, for example, in "Surface-Active Agents and Detergents", Volumes I and II, by Schwartz, Perry and Berch.

The preferred detergent-active compounds that can be used are soaps and synthetic non-soap anionic, and non-ionic compounds.

For laundry main-wash applications, preferred levels of surfactant in the composition are such that at the specified dosage level the wash liquor has a surfactant (other than soap) concentration of less than 1 g/L, more preferably less than 0.5 g/L. This is a low level of surfactant as compared with conventional wash liquors. Such low dosage and/or low surfactant products have environmental advantages in that the products require transport of smaller quantities of material and have a reduced usage of surfactants. However at such low levels of surfactant the ionic strength of the wash liquor is typically low and under such circumstances the problem of electrostatic repulsion of the particles and the substrate is more marked. Thus, particles which have a delivery aid according to the present invention have particular advantages in these environmentally beneficial cleaning systems.

In order that the present invention may be further understood and carried forth into practice it will be further described with reference to the following examples:

### Examples

PPT-POET with Mw 4500 under trademark SRN300 was received from Clariant. Epichlorohydrin was purchased from Aldrich. Cyanuric chloride and Meso-erythritol were supplied by Alfa Aesor. Locus bean gum (LBG) was purchased from Sigma and dehydrated by distilling water off in toluene prior to use. Extra dry solvents tetrahydrofuran (THF) and dimethyl sulfoxide (DMSO) over molecular sieves were obtained form Acros Organics. Antimony trioxide (Sb₂O₃), ethylene glycol (EG), 2, 6-di-tert-butyl-4-methylphenol (DBMP), dimethyl-p-phthalate (DMT), zinc acetate, polyethylene glycol 2000, concentrated sulphuric acid and phenol were purchased from Sinopharm Chemical Reagent Co., Ltd.

### Example 1: Synthesis of LBG-graft-PPT-POET and LBG-graft-PET-POET

### a) Synthesis of PET-POET sub-unit

### Synthesis of high molecular weight linear PET-POET:

PET-4900 a polyethylene terephthalate (Mn=4,900); poly (ethylene glycol) 20,000 (Mn=20,000) was purchased from Fluka;
The PET-POET sample was prepared utilising a stainless steel reaction kettle which offers mechanical stirring, fine thermo-controlling and high vacuum level. The reaction kettle was supplied by Weihai Auto-control Reaction Kettle Ltd. 80 grams of PEG of 20,000 molecular weight and 5 grams of PET-4900 were used for the transesterification polymerisation. Antimony oxide (20mg) and calcium acetate (20mg) were utilised as the catalyst and 2,6-ditert-butyl-4-methylphenol (80mg) as anti-oxidant. Before heating the reaction mixture, vacuum was applied to the kettle, followed with re-filling with nitrogen. This process was repeated three times; and then under vacuum level below zero mmHg and mechanical stirring at 50 rpm, the temperature was gradually elevated to the reaction temperature around 260°C and maintained for 5 hours. Transesterification reaction took place with the release of ethylene glycol. The product was taken out of the kettle with a spatula while it was hot, usually at 150°C. The viscous polymer (PE170707) cooled down to hard solid of Mn=30K.

### Synthesis of branched PET-POET:

A three-necked flask equipped with a over-head stir was charged with 97.001 g DMT, 62.002 g EG and 0.029 g Zn(Ac)2 under nitrogen protection. The mixture was heated slowly to 190∼195°C in an oil bath for transesterification. Methanol was distilled off until the theoretical amount was collected. Then the reaction was cooled down under vacuum until the mixture changed from liquid to white solid. The resultant oligomer of EG-DMT was collected for further use.

The branched PET-POET sample was prepared utilising a stainless steel reaction kettle which offers mechanical stirring, fine thermo-controlling and high vacuum level. The reaction kettle was supplied by Weihai Auto-control Reaction Kettle Ltd. Generally, 19.302 g of EG-DMT oligomer, 75.526 g polyethylene glycol 2000, 1.921 g meso-erythritol (brancher), 0.016 g Sb2O3 (catalyst) and 0.042 g DBMP (anti-oxidant) were added into the reaction kettle. Vacuum was applied to the reaction kettle followed by re-filling with nitrogen and such gas-exchange process repeated three times. Then, the mixture was gradually heated to reaction temperature around 250 °C under vacuum level ∼2 mbar and with mechanical stirring 50 rpm. Transesterification reaction took place with release of ethylene glycol and maintained for 15 hours. The mixture was then cooled down to room temperature to yield viscous product (SH524).

### b) Synthesis of LBG-graft-Low molecular weight PPT-POET

### Synthesis of epichlorohydrin modified SRN300:

The low molecular weight PPT-POET SRN300 (4.114g) was dissolved in 150 ml DMSO and the solution stirred at room temperature for one hour. Then 33 ml epichlorohydrin was added dropwise. The mixture was stirred at 50 °C for three days, and then at 150 °C for another 5 hours. After DMSO was removed through rota-evaporator under vacuo, the mixture was precipitated in ether to yield lightly yellowish solid followed by vacuum drying at 80 °C for 10 hours.

### Grafting SRN300 onto LBG:

The synthesis was carried out by empolying epichlorohydrin as linker. 0.203 g LBG and 0.025 g NaOH were dissolved in 80 ml DMSO in 250 ml round-bottomed flask. Then 0.702g epichlorohydrin derived SRN300 in 30 ml DMSO was added dropwise to the reaction bottle over a period of 0.5 hour. The reaction mixture was then stirred at different temperature for different batches (40°C, 80°C, 120°C and 150°C) for 3 days. The resultant graft copolymer was collected through precipitation in acetone followed by vacuum drying at 60°C overnight. The resultant graft copolymer samples were analyzed by ¹H NMR in deuterium oxide.

### c) Synthesis of LBG-graft-PE170707

### Synthesis of cyanuric chloride modified PE170707:

3.000 g of the high molecular weight PET-POET PE170707 (as produced by example 1(a)) was added into 150 ml THF in 250 ml round-bottomed flask. The mixture stirred at 25°C for 6 hours. After complete dissolution of PE170707, 0.019 g cyanuric chloride and 0.011 g K₂CO₃ were added and the mixture stirred continuously at room temperature for 15 hours. After THF was removed through rota-vapor in vacuo, the mixture was precipitated in ether followed by drying in vacuum oven at 60°C for 10 hours to yield lightly yellowish solid.

### Grafting PE170707 onto LBG:

0.250 g LBG and 0.031g NaOH were dissolved in 150 ml DMSO in 500 ml round-bottomed flask. Then 0.500 g cyanuric chloride modified PE170707 in 40 ml DMSO was added drop-wise to the reactor over a period of 0.5 hour. The reaction mixture was then stirred at different temperature for different batches (40°C and 80°C) for 36 hours. The mixture was purified utilizing membrane separation device with polyvinylidene fluoride (PVDF) membrane with cut-offs Mw 70k. After DMSO was removed through rota-evaporator under vacuo, the product was obtained by drying in vacuum at 80°C for 10 hours.

### d) Synthesis of LBG-graft-SH524

### Synthesis of cyanuric chloride derived SH524:

5.000 g of the branched polymer SH524 (as produced according to example 1(a) was added into 150 ml THF in 250 ml round-bottomed flsak. The mixture stirred at 25°C for 6 hours. After complete dissolution of PE170707, 0.019 g cyanuric chloride and 0.011 g K₂CO₃ were added and the mixture stirred continuously at room temperature for 15 hours. After THF was removed through rota-evaporator under vacuo, the mixture was precipitated in ether followed by drying in vacuum oven at 60°C for 10 hours to yield lightly yellowish solid.

### Grafting SH524 onto LBG:

0.250 g LBG and 0.031 g NaOH were dissolved in 150 ml DMSO in 500 ml round-bottomed flask. Then 0.500 g cyanuric chloride modified SH524 in 40 ml DMSO was added dropwise to the reactor over a period of 0.5 hour. The reaction mixture was then stirred at different temperature for different batches (40°C and 80°C) for 36 hours. The mixture was purified utilizing membrane separation device with polyvinylidene fluoride (PVDF) membrane with cut-offs Mw 70k. After DMSO was removed through rota-evaporator under vacuo, the product was obtained by drying in vacuum at 80°C for 10 hours.

### Example 2: Deposition Performance of LBG-graft-PET-POET on Fabrics

The adsorption of LBG-graft-PET-POET samples onto polyester and cotton were measured with LAS and Synperonic A7 as surfactant stock. The measurement protocol was described as below:
For test formulation, dodecylbenzenesulphonic acid sodium salt (LAS) was purchased from Aldrich. Synperonic A7 (NI, Fatty alcohol ethoxylate) was obtained from Uniqema. Sodium carbonate and potassium carbonate were supplied by Shanghai Lingfeng Chemical Reagent Co., Ltd, and sodium bicarbonate supplied by Shanghai Hongguang Co., Ltd.

### a) Preparation of stock solutions

Surfactant stock solution was prepared by dissolving LAS (5.000 g) and Synperonic A7 (5.000 g) in de-ionised water to a total of 1.0 litre. The surfactant concentration of final solution is 10.000 g/L (50% LAS, 50% Synperonic A7). Base buffer stock solution was prepared by dissolving sodium carbonate (7.547 g) and sodium bicarbonate (2.420 g) in de-ionised water to a total of 1.0 litre. The base buffer concentration is 0.1 M. LBG-g*raft*-PET-POET stock solution was prepared by dissolving 0.500g of LBG-g*raft*-PET-POET (as produced by the method of Example 1) in 500ml of de-ionised water to obtain polymer concentration 1.0 g/l.

### b) Bottle wash procedure

The constant temperature shaking (model THZ platform, supplied by Shanghai Jing Hong laboratory instrument Co. Ltd.) was utilized to simulate wash procedure for deposition performances assessment. The typical procedure was described as below.

A piece of unfluoresced knitted polyester (around 5.0 g with 20x20cm) or three pieces with (10x10cm) of cotton fabric (totally around 4.7 g) was placed into a 60ml bottle containing the model wash liquor (1.0 g/L surfactant, 0.01M base buffer) and polymer sample (0.64 g/L) and the bottle sealed. A bottle containing model wash liquor and fabric but no polymer sample was prepared as control. The purpose was to check whether the fabric caused any changes to the absorbance levels on its own. The shaker bath was heated to 40°C and the bottles were clamped into it and shaken at 125rpm for 45mins. Wash liquor before/after shaking was taken out for further evaluation.

### c) Quantitative calculation for deposition based upon PET-POET

The absorbance of PET-POET in wash liquor before/after deposition was recorded at wavelength 288nm. The deposition amount of polymer sample onto fabric could be calculated based upon the difference of absorbance.

### d) Quantitative calculation for deposition based upon polysaccharide

Phenol-sulphuric procedure was utilized for determination of polysaccharide concentration (Dubois, M., Gilles, K.A., Hamilton, J.K., Roberts, P.A. and Smith, F., 1956, Colorimetric method for the determination of sugars and related substances. Analytical Chemistry 28, 350-356). A typical procedure was shown as below: 2 ml polymer solution was transferred into a 20 ml glass vial. To this solution 1.0 ml of a 5 % (w/w) phenol solution in distilled water was added and the solution gently mixed. Then 5.0 ml concentrated sulphuric acid was added dropwise (Caution: this gives rise to a very exothermic reaction). The solution was allowed to cool for at least 45 minutes before absorbance was measured at 489 nm. The deposition amount of polymer sample onto fabric could be calculated based upon the absorbency difference of polysaccharide in wash liquor before/after deposition evaluation.

### e) Deposition evaluation results

The deposition results of LBG-g*raft*-PET-POET samples onto polyester and cotton were illustrated in the following table:

| | **Amount adsorbed on polyester after main wash (mg/g)** | **Amount adsorbed on cotton after main wash (mg/g)** |
|---|---|---|
| LBG-*graft*-PE170707-40°C | 1.84 | 2.48 |
| LBG-*graft*-PE170707-80°C | 1.97 | 4.26 |
| LBG-*graft*-S H524-40°C | 1.16 | 4.15 |
| LBG-*graft*-SH524-80°C | 1.79 | 3.76 |

mg/g: mg polymer deposited on per g fabric
From the above it can be seen that LBG-*graft*-PET-POET samples showed evident deposition on both polyester and cotton.

### Example 3:

### Surface Attachment of LBG-graft-PET-POET onto Latex Particles (600 nm) via EDAC Coupling

1-Ethyl-3-(3-dimethyiaminopropyl) carbodiimide hydrogen chloride (EDAC) was obtained from Alfa Aesor and all other chemicals obtained from Sinopharm Chemical Reagent Co., Ltd.

### a) Synthesis of carboxyl functional polystyrene particle (600 nm)

Carboxyl functional polystyrene particles were synthesized by emulsifier-free emulsion polymerization. 250 mL three-neck flask was charged with 9.230 g styrene, 0.196 g methylacrylate and 90 mL de-ionised water. A nitrogen blanket and stirring rate of 350 rpm were maintained. This solution was deoxygenated by bubbling with nitrogen for 1 h. After thorough deoxygenation, the temperature was increased to 70°C and a solution of 0.089 g potassium persulfate in 3 mL water injected. The mixture was allowed to react at 70°C for 16 hs. After being allowed to cool down to room temperature, the colloid was filtered and the filtrate collected.

### b) Purification of latex particles

The carboxyl functional polyester particle (600 nm, 7.1 % solids) was purified *via* the following procedure: Step 1: 1.0 mL latex was diluted with 0.5 mL pH 9.01 buffer and centrifuged at 10000 rpm for 15 minutes. Step 2: The supernatant was decanted off. The latex was re-dispersed in 1.0 ml of pH 7 buffer. The latex was centrifuged again at 10000 rpm for 15 minutes. The wash in pH7 buffer was repeated once. Step 3: The supernatant decanted off. The latex was re-dispersed in 1.0 ml de-ionised water. The latex was centrifuged at 10000 rpm for 15 minutes and the supernatant decanted off. The wash in de-ionised water was also repeated once.

### c) Grafting of LBG-graft-PET-POET onto latex particles (600 nm) via EDAC coupling

The purified latex (1.0 mL, 7.1 % solids) was re-dispersed in EDAC solution (0.027g in 1.0 ml of de-ionised water) and stirred at 25 °C for 3 hours. Then the latex was centrifuged at 10000 rpm for 15 minutes and purified in pH 7 buffer and de-ionised water according to Step 2 and 3 shown in example 3b. Then the latex was re-dispersed in 14g of 0.1% (w/w) LBG-g*raft*-PET-POET (LBG-*graft*-PE1707 or LBG-*graft*-SH524 as produced by the method shown in Example 1) in de-ionised water solution. The dispersion was stirred at 25 °C for 18 hours. After that, the latex was centrifuged at 10000 rpm for 15 minutes and purified in pH 7 buffer and de-ionised water again according to Step 2 and 3 shown in example 3b. At last, the latex was re-dispersed in de-ionised water to give a final latex dispersion of LBG-*graft*-PET-POET grafted particles with solids of 1.0% (w/w).

### d) Preparation of comparative Example (Polystyrene latex without surface attached LBG-graft-PET-POET)

A comparative (control) sample without any addition of LBG-*graft*-PET-POET was prepared according to the identical procedure shown in example 3a. The final solid content of latex was adjusted to 1.0% (w/w).

### Example 4:

### Deposition Performance of Polystyrene Latex (600 nm) on Fabrics

The deliveries of polystyrene latex (600 nm, with or without LBG-*graft*-PET-POET) were assessed with LAS and Synperonic A7 as surfactant stock using the constant temperature shaking (model THZ platform, supplied by Shanghai Jing Hong laboratory instrument Co., Ltd.).

For test formulation, dodecylbenzenesulphonic acid sodium salt (LAS) was purchased from Aldrich. Synperonic A7 (NI, Fatty alcohol ethoxylate) was obtained from Uniqema. Sodium carbonate and potassium carbonate were supplied by Shanghai Lingfeng Chemical Reagent Co., Ltd, and sodium bicarbonate supplied by Shanghai Hongguang Co., Ltd.

### a) Preparation of stock solutions

Surfactant stock was prepared by dissolving LAS (5.0 g) and Synperonic A7 (5.0 g) in de-ionised water to a total of 1.0 litre. The surfactant concentration of final solution is 10 g/L (50% LAS, 50% Synperonic A7). Base buffer stock was prepared by dissolving sodium carbonate (7.546 g) and sodium bicarbonate (2,419 g) in de-ionised water to a total of 1.0 litre. The base buffer concentration is 0.1 M.

### b) Bottle wash procedure

The constant temperature shaking was utilized to simulate wash procedure for deposition performances assessment. The typical procedure was described as below:
55 ml model wash liquor (1.0 g/L surfactant, 0.01 M base buffer) containing 600 ppm polystyrene latex (600 nm) with or without LBG-g*raft*-PET-POET was prepared in a 60ml bottle and a 5.0 mL aliquot taken out for absorbance recording at 400nm. This absorbance value represents 100% particles in the wash solution prior to the bottle wash process.

Two pieces (1 0x10cm) of unfluoresced knitted polyester (totally around 2.42 g) or two pieces (10x10cm) of cotton fabric (totally around 3.16 g) were then placed into the bottle and the bottle sealed. The shaker bath was heated to 40°C and the bottle clamped into it and shaken at 125 rpm at 40°C for 30 minutes to simulate the main wash. The fabrics were then removed and wrung by hand and a 5 mL aliquot of the main wash solution taken out for absorbance recording at 400 nm. The amount of adsorbed polystyrene latex on fabric could be determined by turbidity difference before/after main wash stage.

The bottle was then thoroughly rinsed. Wrung fabrics were put back to the bottles and 50 mL of DI water added. The bottle was shaken at 40°C for 10 minutes under 125 rpm to simulate a rinse procedure. The fabrics were then removed and wrung by hand again. A 5.0 mL aliquot of the rinse solution was taken out for absorbance recording at 400 nm. The loss amount of adsorbed polystyrene latex from fabric in rinse 1 stage could be determined according to turbidity. The rinse procedure was repeated once and the loss amount of polystyrene latex from fabric in rinse 2 stage could be determined.

### c) Deposition evaluation results

The deposition results of polystyrene latex (600 nm, with or without LBG-*graft-*PET-POET) onto polyester and cotton were illustrated in the following table (embodiments of the invention are shown in bold):

| | **Fabric type** | **Amount adsorbed after main wash (mg/g)** | **Amount adsorbed after rinse 1 (mg/g)** | **Amount adsorbed after rinse 2 (mg/g)** |
|---|---|---|---|---|
| Comparative Example (control) | Polyester | 0.3 | 0 | 0 |
| **LBG*-graft-*PE 170707 -40°C** | **Polyester** | **3.8** | **1.9** | **1.5** |
| **LBG*-graft-*PE 170707 -80°C** | **Polyester** | **8.2** | **4.2** | **2.7** |
| **LBG-*graft-*SH524-40°C** | **Polyester** | **2.4** | **0.6** | **0.3** |
| Comparative Example (control) | Cotton | 0 | 0 | 0 |
| **LBG*-graft-*PE170707-40°C** | **Cotton** | **1.7** | **1.3** | **0.9** |
| **LBG-*graft-*PE170707 -80°C** | **Cotton** | **2.5** | **1.8** | **1.4** |
| **LBG-*graft-*SH524-40°C** | **Cotton** | **1.3** | **0.9** | **0.6** |

mg/g: mg polymer deposition per g fabric
From the above it can be seen that surface attachment of LBG-g*raft*-PET-POET (LBG-*graft*-PE1 70707-40°C, LBC-*graft*-PE170707-80°C or LBG-*graft*-SH524-40°C) *via* EDAC coupling improved particle (600 nm) deposition significantly onto polyester and cotton.

### Example 5: Surface Attachment of LBG-graft-PET-PQET onto Latex Particles (4 µm) via EDAC Coupling

1-Ethyl-3-(3-dimethylaminopropyl) carbodiimide hydrogen chloride (EDAC) was obtained from Alfa Aesor. All other chemicals were obtained from Sinopharm Chemical Reagent Co., Ltd. 2, 2'- azo-bisisobutylnitrile (AIBN) was purified before use by re-crystallization in acetone.

### a) Synthesis of carboxyl functional polystyrene particle (4 µm)

Carboxyl functional polystyrene particles were synthesized by dispersion copolymerization. 250 mL three-neck flask was charged with 70 g ethanol and 6 mL de-ionised water containing 19.1 g styrene, 0.69 g acrylic acid and 1.5 g poly (N-vinylprrolidiene). A nitrogen blanket and stirring rate of 350 rpm were maintained. This solution was deoxygenated by bubbling with nitrogen for 1h. After thorough deoxygenation, the temperature was increased to 70 °C and 2.4 g AIBN added to this solution. The reaction was kept at 70°C for 20 hrs. After being to cool to room temperature, the latex was centrifuged at 10000 rpm for 15 minutes and the supernatant decanted off. The latex particles were re-dispersed in 50 ml ethanol, centrifuged at 10000 rpm for 15 minutes and the supernatant decanted off. The latex was then re-dispersed in ethanol and centrifuged again. Finally the latex particles were re-dispersed in 50 ml DI water with solids of 2.7% (w/w).

### b) Purification of latex particles

The carboxyl functional polyester particle (4 µm, 2.7% solids) was purified according to the produce shown in Example 3b.

### c) Grafting of LBG-graft-PET-POET onto latex particles (4 µm) via EDAC coupling

The purified polyester particle (4 µm, 2.7% solids) was grafted with LBG-graft-PET-POET_according to the produce shown in Example 3c. At last, the latex was re-dispersed in de-ionised water to give a final latex dispersion of LBG-*graft*-PET-POET grafted particles with solids of 1.0% (w/w).

### d) Preparation of Comparative Example (Polystyrene latex without surface attached LBG-graft-PET-POET)

A comparative (control) sample without any addition of LBG-*graft*-PET-POET was prepared according to the identical procedure shown in example 5a. The final solid content of latex was adjusted to 1.0% (w/w).

### Example 6: Deposition Performance of Polystyrene Latex (4 µm) on Fabrics

The deliveries of polystyrene latex (4 µm, with or without LBG-*graft*-PET-POET) were assessed with LAS and Synperonic A7 as surfactant stock using the constant temperature shaking (model THZ platform, supplied by Shanghai Jing Hong laboratory instrument Co., Ltd.). For test formulation, dodecylbenzenesulphonic acid sodium salt (LAS) was purchased from Aldrich. Synperonic A7 (NI, Fatty alcohol ethoxylate) was obtained from UNIQEMA. Sodium carbonate and potassium carbonate were supplied by Shanghai Lingfeng Chemical Reagent Co., Ltd, and sodium bicarbonate supplied by Shanghai Hongguang Co., Ltd.
**a) Preparation of stock solutions:** Same as Example 4a
**b) Bottle wash procedure:** Same as Example 4b
**c) Deposition evaluation results**

The deposition results of polystyrene latex (4 µm, with or without LBG-*graft*-PET-POET) onto polyester and cotton were illustrated in the following table (embodiments of the invention are shown in bold):

| | **Fabric type** | **Deposition after Main wash (%)** | **Deposition after rinse 1 (%)** | **Deposition after rinse 2(%)** |
|---|---|---|---|---|
| Comparative Example (control) | Polyester | 27.2 | 7.3 | 3.5 |
| **LBG*-graft-*PE170707-40°C** | **Polyester** | **88.8** | **63.1** | **52.6** |
| **LBG-*graft-*PE 170707 -80°C** | **Polyester** | **74.2** | **52.1** | **48.2** |
| Comparative Example (control) | Cotton | 20.1 | 8.2 | 3.1 |
| **LBG*-graft-*PE170707 -40°C** | **Cotton** | **79.2** | **72.9** | **64.9** |
| **LBG-*graft-*PE170707-80°C** | **Cotton** | **92.8** | **88.3** | **79.6** |

From the above it can be seen that surface attachment of LBG-*graft*-PET-POET (LBG-*graft*-PE170707-40°C and LBG-*graft*-PE170707-80°C) *via* EDAC coupling significantly improved particle (4 µm) deposition onto polyester and cotton and retention of the deposited particles during rinsing.

## Claims

1. A polymer comprising at least one phthalate-containing region substantive to polyester and at least one polysaccharide-containing region substantive to cellulose, wherein the at least one phthalate-containing region further comprises a polyol; the at least one polysaccharide-containing region comprises a β-1,4-linked backbone; the polymer has, in part, the structure of poly-mannan, poly-glucan, poly-glucomannan, poly-xyloglucan and poly-galactomannan or a mixture thereof; and the at least one phthalate/polyol region comprises units derived from polyethylene and/or polypropylene glycol and a terephthalate.

2. A polymer according to claim 1 wherein the structure of the or each region derived from poly glycol and terephthalate is that of a polymer selected from the group comprising PPT/POET, PET/POET, PEG/POET, PET/PEG and terephthalate/glycerol/ethylene glycol polymers.

3. A polymer according to claim 1 which is a graft polymer of locust bean gum, guar gum or xyloglucan and a PPT-POET or PET-POET polymer.

4. A polymer according to claim 1 attached to particles comprising a benefit agent which have said polymer, as a deposition aid, on their outer surface.

5. A polymer according to claim 4 wherein the benefit agent is a perfume.

6. A composition comprising at least one surfactant and a polymer according to any of claims 1-5.

7. A particle for deposition of a benefit agent comprising:
a) a core region which comprises a benefit agent,
b) a polymeric shell enclosing said core region, and,
c) at least partially exterior to said shell, a polymeric deposition aid comprising a phthalate derived region which is substantive to polyester and is distal from the polymeric shell and a polysaccharide derived region which is substantive to cellulose and is proximal to the polymeric shell.

8. A particle according to claim 7, wherein the benefit agent comprises a perfume.

## Patentansprüche

1. Polymer, umfassend mindestens eine Phthalat enthaltende Region, die für Polyester substantiv ist, und mindestens eine Polysaccharid enthaltende Region, die für Cellulose substantiv ist, wobei die mindestens eine Phthalat enthaltende Region ferner ein Polyol umfasst; die mindestens eine Polysaccharid enthaltende Region ein β-1,4-verknüpftes Grundgerüst umfasst, das Polymer teilweise die Struktur von Polymannan, Polyglucan, Polyglucomannan, Polyxyloglucan und Polygalactomannan oder einer Mischung davon aufweist, und die mindestens eine Phthalat/Polyol-Region Einheiten umfasst, die von Polyethylen- und/oder Polypropylenglycol und einem Terephthalat abgeleitet sind.

2. Polymer nach Anspruch 1, wobei die Struktur der oder jeder von Polyglycol und Terephthalat abgeleiteten Region die eines Polymers ist, das aus der Gruppe ausgewählt ist, die PPT/POET-, PET/POET-, PEG/POET-, PET/PEG- und Terephthalat/Glycerin/Ethylenglycol-Polymere umfasst.

3. Polymer nach Anspruch 1, das ein Pfropfpolymer von Johannisbrotkernmehl, Guargummi oder Xyloglucan und einem PPT-POET-oder PET-POET-Polymer ist.

4. Polymer nach Anspruch 1, das an Teilchen gebunden ist, die ein Vorteil verleihendes Mittel umfassen und die das Polymer als eine Abscheidungshilfe auf der Außenfläche aufweisen.

5. Polymer nach Anspruch 4, wobei das Vorteil verleihende Mittel ein Duftstoff ist.

6. Zusammensetzung, umfassend mindestens ein Tensid und ein Polymer nach irgendeinem der Ansprüche 1 - 5.

7. Teilchen zur Abscheidung eines Vorteil verleihenden Mittels, umfassend:
a) eine Kernregion, die ein Vorteil verleihendes Mittel umfasst,
b) eine Polymerschale, die die Kernregion umschließt, und
c) zumindestteilweise außerhalb der Schale eine polymere Abscheidungshilfe, umfassend eine von Phthalat abgeleitete Region, die für Polyester substantiv ist und distal von der Polymerschale ist, und eine von Polysaccharid abgeleitete Region, die für Cellulose substantiv ist und proximal zu der Polymerschale ist.

8. Teilchen nach Anspruch 7, wobei das Vorteil verleihende Mittel einen Duftstoff umfasst.

## Revendications

1. Polymère comprenant au moins une région contenant du phtalate substantive au polymère et au moins une région contenant du polysaccharide substantive à la cellulose, dans lequel la au moins une région contenant du phtalate comprend de plus un polyol ; la au moins une région contenant du polysaccharide comprend une structure β-1,4-liée ; le polymère présente, en partie, la structure de poly-mannane, poly-glucane, poly-glucomannane, poly-xyloglucane et poly-galacto-mannane ou un mélange de ceux-ci ; et la au moins une région de phtalate/polyol comprend des unités dérivées de polyéthylène et/ou de polypropylène glycol et un téréphtalate.

2. Polymère selon la revendication 1, dans lequel la structure de la ou chaque région dérivée de polyglycol et téréphtalate est celle d'un polymère choisi dans le groupe comprenant PPT/POET, PET/POET, PEG/POET, PET/PEG et des polymères de téréphtalate/glycérol/éthylène glycol.

3. Polymère selon la revendication 1 qui est un polymère greffé de gomme de caroube, gomme de guar ou xyloglucane et un polymère de PPT-POET ou PET-POET.

4. Polymère selon la revendication 1 fixé à des particules comprenant un agent bénéfique qui présentent ledit polymère, comme un agent d'aide au dépôt, sur leur surface externe.

5. Polymère selon la revendication 4, dans lequel l'agent bénéfique est un parfum.

6. Composition comprenant au moins un tensioactif et un polymère selon l'une quelconque des revendications 1-5.

7. Particule pour le dépôt d'un agent bénéfique comprenant :
a) une région de noyau qui comprend un agent bénéfique,
b) une enveloppe polymère enfermant ladite région de noyau, et,
c) au moins partiellement à l'extérieur de ladite enveloppe, un agent d'aide au dépôt polymère comprenant une région dérivée de phtalate qui est substantive au polyester et est distale de l'enveloppe polymère et une région dérivée de polysaccharide qui est substantive à la cellulose et est proximale de l'enveloppe polymère.

8. Particule selon la revendication 7, dans laquelle l'agent bénéfique comprend un parfum.
